# EUROPÄISCHE PATENTSCHRIFT

(11) **EP 3 056 074 B1**
(45) Veröffentlichungstag und Bekanntmachung des Hinweises auf die Patenterteilung: **28.03.2018**
(21) Anmeldenummer: 16000104.6
(22) Anmeldetag: 17.01.2016
(51) Int. Cl.: A01C 23/00, A01B 73/02

(54) **VERTEILERVORRICHTUNG FÜR EIN AUSBRINGFAHRZEUG, INSBESONDERE EIN GÜLLEAUSBRINGFAHRZEUG**
DISTRIBUTOR DEVICE FOR A SPREADER VEHICLE, IN PARTICULAR A LIQUID MANURE SPREADER VEHICLE
DISPOSITIF DE DISTRIBUTION POUR UN EPANDEUR, EN PARTICULIER POUR UN EPANDEUR DE LISIER

(30) Priorität: 13.02.2015 DE 202015001067 U
(43) Veröffentlichungstag der Anmeldung: 17.08.2016
(73) Patentinhaber: Zunhammer, Sebastian, 83301 Traunreut (DE)
(72) Erfinder: Zunhammer, Sebastian, 83301 Traunreut (DE)
(74) Vertreter: Einsiedler, Johannes

(56) Entgegenhaltungen:
- EP-A2- 1 520 462
- EP-A2- 1 813 150
- DE-U1- 20 004 150
- FR-A1- 2 969 461

## Beschreibung

Die Erfindung betrifft eine Verteilervorrichtung für ein Ausbringfahrzeug, insbesondere ein Gülleausbringfahrzeug, mit zumindest einem um eine vertikale Achse schwenkgelagerten Auslegerarm und zumindest einem um eine horizontale Achse schwenkgelagerten Verteilerkamm mit einer Vielzahl an Verteilerschläuchen, die von einem Verteilerkopf gespeist werden.

Gülleausbringfahrzeuge gemäß dem Stand der Technik sind mit Verteilervorrichtungen ausgerüstet, welche sich über die mehrfache Breite des Ausbringfahrzeuges erstrecken. Ein gattungsaemäßes Gülleausbringfahrzeug offenbart beispielsweise die EP 1 520 462A2. In einem möglichen Betriebszustand befindet sich das Verteilersystem in einer Ausbringstellung, in welcher sich die Verteilervorrichtung im Wesentlichen quer zur Fahrtrichtung des Ausbringfahrzeuges erstreckt. In einem anderen Betriebszustand, nämlich im Transportfall, wenn also keine Gülle ausgebracht wird, sondern das Ausbringfahrzeug am öffentlichen Straßenverkehr teilnimmt, befindet sich die Verteilervorrichtung in der sogenannten Transportstellung.

In dieser Stellung ist der zumindest eine um eine vertikale Achse schwenkgelagerte Auslegerarm um ca. 90° zur Fahrzeuglängsachse hin abgewinkelt und verläuft damit im Wesentlichen parallel zur Längsachse des Gülleausbringfahrzeuges. Um ein Nachlaufen der Gülle aus den, beispielsweise in der Schleppschlauchtechnik eingesetzten Verteilerschläuchen, und damit eine Verschmutzung von Wegen und Straßen zu verhindern, ist in der Transportstellung der zumindest eine um eine horizontale Achse schwenkgelagerte Verteilerkamm um ca. 180° derart verschwenkt, dass die Austrittsöffnungen der Verteilerschläuche im Wesentlichen nach oben, ausgerichtet sind.

Aus der DE 200 04 150 U1 ist eine Gestängevorrichtung für Verteilerfahrzeuge bekannt, bestehend aus einem festen Auslegerteil und einem an diesem beweglich befestigten Auslegerende, die dadurch gekennzeichnet ist, dass das Auslegerende auf dem festen Auslegerteil von einer Transportposition in eine Endposition verschiebbar geführt ist.

In der Transportstellung sind die verschiebbaren Schlauchhalter beigezogen, und der Gestängeausleger ist eingeklappt und längs des Tanks angelegt sodass die Fahrzeugbreite einen von der Straßenverkehrsbehörde festgelegten Wert nicht überschreitet. Dadurch wird die Stabilität des Gestängeauslegers im Transportzustand erhöht, da eine lange überkragende Konstruktion, die bei schnellen Fahrten eine hohe dynamische Belastung verursacht, vermieden wird. Aus der FR 2969461 A1 ist eine Verteilervorrichtung mit an Auslegerarmen gelagerten, parallel zu den Auslegerarmen verschiebbaren Verteilerkämmen bekannt.

Gülle als natürlicher Dünger wird im Vergleich zu mineralischen Dünger in weit größeren Mengen pro Quadratmeter ausgetragen, wodurch die einzusetzenden Ausbringfahrzeuge erheblich größer und mit sehr breiten Reifen ausgestattet sind. Die für einen Pflanzenwuchs verlorengehenden Spurstreifen sind folglich sehr breit. Es ist daher üblich, landwirtschaftlich genutzte Felder für die Saat, die Pflege, den Pflanzenschutz und die Düngung so anzulegen, dass ein Ausbringfahrzeug oder ein Traktor mit den erforderlichen Gerätschaften durch eine immer wieder zu benutzende Fahrspur fährt. Aus diesem Grund gibt es bestimmte Arbeitsbreiten von 12, 15, 18 Metern, oder einem ähnlichem Raster, auf welchen die einzelnen Arbeitsgeräte und auch die Ausbringfahrzeuge für Gülle abgestimmt sind.

Bei einer ungünstig dimensionierten oder einer sehr großen auszutragenden Güllemenge pro Hektar, oder aber bei einem sehr langen Schlag, d.h. einem einheitlich zu bewirtschaftenden Teil eines Feldes, besteht die Gefahr, dass sich die beim Abfahren einer Fahrspur im Gülleausbringfahrzeug mitgeführte Gülle erschöpft.

Dies hat zur Folge, dass das Ausbringfahrzeug zumindest ein zweites Mal eine bereits mit Gülle beaufschlagte Fahrspur benutzen muss. Dabei ist es oft nur mit Schwierigkeiten feststellbar, bis wohin die zuvor ausgetragene Charge gereicht hat, was zur Folge hat, dass in manchen Fällen ein Teil des Feldes unversorgt oder aber doppelt versorgt wird, wobei beide Fälle zu vermeiden sind.

Eine zwei- oder aber sogar mehrfache Benutzung einer Fahrspur führt auch zu einer ungewünschten Verunreinigung des Ausbringfahrzeuges, wie auch zu einer Beschädigung der Pflanzen. Der Bestand kann nämlich an den durch das Überfahren einer begüllten Fahrspur verunreinigen Reifen, dem Fahrwerk etc., kleben bleiben und durch die Vorwärtsbewegung des Ausbringfahrzeuges ausgerissen werden. Schließlich wird auch der Boden verdichtet, was in der Landwirtschaft grundsätzlich als nachteilig anzusehen ist.

Zur Vermeidung vorstehend genannter Nachteile schlägt die DE 100 41 148 A1 vor, Arme an der Austragvorrichtung zu verwenden, die durch Gelenke in zwei Teile unterteilt sind, und die für den Betrieb in zwei feststellbare Verschwenkstellungen (beide senkrecht zur Fahrtrichtung) einstellbar sind, und zwar in eine gestreckte Stellung und in eine weitere Stellung, in der die Armteile parallel zueinander und nebeneinander befindlich sind. Zudem sind Träger für die Düsen und/oder Auslaufschläuche zu verwenden, deren Länge x so gewählt ist, dass in der parallelen Stellung die Enden der Träger unmittelbar nebeneinander liegen, während sie in der gestreckten Stellung einen Abstand von 2x voneinander haben. Schließlich muss man die zu bearbeitende Fläche zweimal in der gleichen Spur befahren, einmal mit in gestreckter Stellung stehenden Armen, das andere Mal mit parallel zueinander eingestellten Armen. Auch die EP 1 813 150 A1 offenbart ein Spritzgestänge für Feldspritzen, das aus einem Mittelteil und einklappbaren Seitenteilen besteht.

Diese Lösungen sind jedoch für eine Verteilervorrichtung, insbesondere für große Arbeitsbreiten, insbesondere für ein Gülleausbringfahrzeug, unbrauchbar. Ein, beispielsweise mittig angeordnetes Schwenkgelenk, ist nämlich durch das hohe Gewicht des Verteilerkamms mit der Vielzahl an Verteilerschläuchen, dem Verteilerkopf, sowie gegebenenfalls vorhandenen Gleitschuhen und Spannfedern sehr hohen Torsionskräften unterworfen. Der technische und insbesondere der materialtechnische Aufwand, für ein derartig verwendbares Schwenkgelenk mit einer vertikalen Schwenkachse stünde in keinem Verhältnis zum wirtschaftlichen Nutzen einer Verteilervorrichtung für große Arbeitsbreiten.

Aufgabe der vorliegenden Erfindung ist es daher, die mechanische Stabilität einer gattungsgemäßen Verteilervorrichtung für ein Ausbringfahrzeug, insbesondere für ein Gülleausbringfahrzeug, zu verbessern, wobei der materialtechnische Aufwand insbesondere im Hinblick auf das Gesamtgewicht der Verteilervorrichtung minimal sein sollte. Gelöst wird die Aufgabe durch eine Verteilervorrichtung für ein Ausbringfahrzeug, insbesondere ein Gülleausbringfahrzeug, der eingangs genannten Art, die dadurch gekennzeichnet ist, dass der Verteilerkamm über eine erste Schub-Zugvorrichtung im Wesentlichen parallel zum Auslegerarm zwischen einer ersten Arbeitsstellung mit einem ausgefahrenen Verteilerkamm und einer zweiten Arbeitsstellung mit einem beigezogenen Verteilerkamm verschiebbar geführt ist, und dass der untere Teil des Verteilerkamms dreiteilig ausgeführt ist, und die beiden äußeren Spitzen einklappbar sind. Die Erfindung beruht demnach auf dem allgemeinen Gedanken, ein Schwenkgelenk durch eine Schub-Zugvorrichtung zu ersetzen, um zwischen einer ersten Arbeitsstellung mit einem ausgefahrenen Verteilerkamm und einer zweiten Arbeitsstellung mit einem beigezogenen Verteilerkamm zu wechseln. Als weiterer Vorteil der Schub-Zugvorrichtung gegenüber einem Schwenkgelenk erweist sich die variable Arbeitsbreite. So sind die erste und die zweite Arbeitsstellung jeweils nur als Endstellungen zu sehen. Grundsätzlich ist die Arbeitsbreite frei einstellbar.

Im einfachsten Fall wird mit der erfindungsgemäßen Verteilervorrichtung jede Fahrspur zweimal abgefahren, wobei jeweils die Hälfte der maximalen Arbeitsbreite genutzt wird. In der Regel verfügen Gülleausbringfahrzeuge über zwei Verteilervorrichtungen, so dass die maximale Arbeitsbreite in vier Streifen unterteilt werden kann. Bei einer ersten Fahrt werden dabei die beiden äußeren Streifen und bei einer zweiten Fahrt die beiden inneren Streifen begüllt.

Neben der erfindungsgemäßen horizontalen Verschieblichkeit des Verteilerkamms zur Einstellung der Arbeitsbreite, kann in einer bevorzugten Ausführungsform vorgesehen sein, dass der Verteilerkamm über eine zweite Schub-Zugvorrichtung im Wesentlichen rechtwinklig zu dem Auslegerarm bzw. zu einem Ausschubrahmen verschiebbar geführt ist, um die Arbeitshöhe wie auch die Transporthöhe einzustellen.

Dies ist zum einen vorteilhaft um Bodenunebenheiten eines Feldes bzw. Schlages, insbesondere quer zur Fahrtrichtung, auszugleichen und zum anderen, um die Gesamthöhe des Ausbringfahrzeugs, insbesondere wenn dieses eine große Bereifung aufweist, zu verringern. Beide Schub-Zugvorrichtungen werden vorzugsweise über hydraulische Zylinder, elektrische Spindeltriebe oder Zahnriemenantriebe betrieben.

In einer bevorzugten Ausführungsform der erfindungsgemäßen Verteilervorrichtung ist der Verteilerkopf, der die Vielzahl an Verteilerschläuchen versorgt, am Verteilerkamm angebracht. Dies hat den Vorteil, dass in der Transportstellung, in der der Verteilerkamm um ca. 180° derart verschwenkt ist, dass die Austrittsöffnungen der Verteilerschläuche im Wesentlichen nach oben ausgerichtet sind, diese keiner Biegebelastung unterliegen, d.h. nicht geknickt sind. Ein weiterer Vorteil dieser Ausführungsform liegt darin, dass die Schläuche steil, d.h. mit einem hohen Gefälle angebracht werden können, wodurch sich das Auslaufverhalten der Gülle verbessert. Schließlich wird noch durch das Gewicht des Verteilerkopfs der Druck der Gleitschuhe auf den Boden in vorteilhafter Weise verstärkt.

In einer besonders bevorzugten Ausführungsform ist an der Verteilervorrichtung, insbesondere an dem Auslegerarm, ein weiterer um eine horizontale Achse schwenkgelagerter Verteilerkamm mit einer Vielzahl an Verteilerschläuchen, die von einem Verteilerkopf gespeist werden, ausgebildet. Dadurch lässt sich in vorteilhafter Weise die durch den Auslegerarm vorgegebene Arbeitsbreite vollumfänglich abdecken.

In diesem Fall wird mit der erfindungsgemäßen Verteilervorrichtung jede Fahrspur nur einmal abgefahren, wobei die maximale Arbeitsbreite genutzt wird. Verfügt das Gülleausbringfahrzeug über zwei Verteilervorrichtungen, nämlich einer rechts und einer links zur Fahrzeugachse angeordneten Verteilervorrichtung, können mit einer Fahrt sowohl die beiden äußeren die auch die beiden inneren Streifen begüllt werden. Auch in dieser Ausführungsform ist die Arbeitsbreite frei einstellbar; so besteht die Möglichkeit einer Teilabschaltung der vier Verteilerköpfe wie auch ein unabhängiges Verschwenken der vier Verteilerkämme dergestalt, dass die Austrittsöffnungen der Verteilerschläuche im Wesentlichen nach oben ausgerichtet sind.

Zusätzlich lässt sich in dieser Ausführungsform der äußere horizontal verschiebliche Verteilerkamm dergestalt beiziehen, dass die beiden Verteilerkämme parallel zueinander und hintereinander angeordnet sind. In dieser dritten Arbeitsstellung kann somit in vorteilhafter Weise doppelt so viel Gülle auf der Hälfte der maximalen Arbeitsbreite ausgebracht werden.

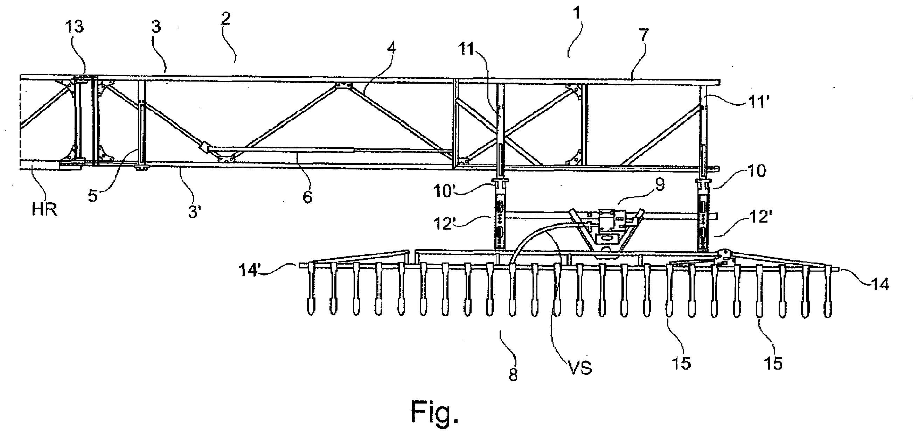

Die Erfindung ist nachstehend anhand eines in der einzigen Figur schematisch dargestellten Ausführungsbeispiels näher erläutert. Es zeigt die Figur:
Fig. eine Darstellung einer Verteilervorrichtung, angeordnet in Fahrtrichtung rechts

Die Figur beschränkt sich im Wesentlichen auf die Darstellung der Verteilervorrichtung. So sind beispielsweise der Speiseschlauch für den Verteilerkopf und die Vielzahl an Verteilerschläuchen, bis auf einen, mit VS bezeichnet, aus Gründen der besseren Übersichtlichkeit nicht eingezeichnet.

In der Regel verfügen eingangs erwähnte Ausbringfahrzeuge, insbesondere Gülleausbringfahrzeuge über zwei wie in der Fig. dargestellte Verteilervorrichtungen. Diese sind links und rechts an einem am Fahrzeug ausgebildeten Hauptrahmen (HR), vorzugsweise gelenkig angeordnet.

Gemäß der Figur weist die Verteilervorrichtung 1 einen Auslegerarm 2 auf, der im Wesentlichen aus zwei parallel angeordneten Tragrohren 3, 3', sowie aus zwischen diesen Rohren angeordneten Verstrebungen 4 und 5 gebildet ist. Die Verteilervorrichtung 1 ist an einem am Ausbringfahrzeug ausgebildeten Hauptrahmen (HR) befestigt. Eine erste Schub-Zugvorrichtung 6 ist zwischen einer Verstrebung 3 des Auslegerarms 2 und einem Ausschubrahmen 7 des Verteilerkamms 8 angelenkt. Grundsätzlich kann die Schub-Zugvorrichtung 6 natürlich auch an den Tragrohren 3, 3' oder den Verstrebungen 5 angebracht sein. Über diese erste Schub-Zugvorrichtung 6 ist der Verteilerkamm 8 über den Ausschubrahmen 7 parallel zum Auslegerarm 2 linear verschieblich geführt. Die Linearführung erfolgt vorzugsweise in einer Kunststoffgleitführung über einen hydraulischen Linearschub, beispielsweise durch einen hydraulischen Zylinder. Eine denkbare Ausführungsform ist beispielsweise ein Vierkantrohr, das in einem U-Profil geführt wird, wobei Rohr und/oder Profil gleitbeschichtet sind. Der Verteilerkamm 8 wie auch der Verteilerkopf 9 sind über die beiden Schwenkgelenke 10, 10' um eine horizontale Achse schwenkgelagert. Ein Verschwenken des schwenkgelagert aufgehängten Verteilerkamms 8 um ca. 180°, in eine Transportstellung, in der die Austrittsöffnungen der Verteilerschläuche im Wesentlichen nach oben ausgerichtet sind erfolgt über eine im Wesentlichen vertikal zum Auslegerarm angeordnete zweite Schub-Zugvorrichtu ng 11, 11'.

Über eine weitere Schub-Zugvorrichtung 12, 12' ist der Verteilerkamm 8 gegenüber dem Ausschubrahmen 7 bzw. gegenüber dem Auslegerarm 2 abstandsvariabel gehaltert. Diese abstandsvariable Halterung dient einerseits dafür den Verteilerkamm 8 in einer Betriebsstellung in Richtung des Ackerbodens zu verfahren, und andererseits dafür, in einer Transportstellung die Gesamthöhe des Ausbringfahrzeugs zu reduzieren.

In der vorstehend genannten Transportstellung ist nicht nur der Verteilerkamm 8 um ca. 180° derart nach oben verschwenkt, dass die Austrittsöffnungen der Verteilerschläuchen im Wesentlichen nach oben ausgerichtet sind, sondern auch der Auslegerarm 2 über das Schwenkgelenk 13 um eine vertikale Achse um ca. 90° zur Fahrzeuglängsachse hin abgewinkelt. In einer bevorzugten Transportstellung sind die beiden äußeren Spitzen 14, 14' eingeklappt und der Verteilerkamm (8) ist beigezogen und um ca. 180° nach oben verschwenkt Zudem ist der Auslegerarm 2 parallel zur Fahrzeuglängsachse angelegt.

Gemäß der Figur ist der untere Teil des Verteilerkamms dreiteilig ausgeführt, wobei die beiden äußeren Spitzen 14, 14' eingeklappt werden können. Dadurch lässt sich die Breite des Verteilerkamms um ca. 3 m verringern. In vorteilhafterweise können damit ungleichmäßige Feldränder oder Feldabsätze variabler begüllt und die Transportlänge der Verteilervorrichtung reduziert werden.

Ferner sind am unteren Rahmen Blattfedern mit Gleitschuhen 15 angebracht, um den Scharrdruck zu erhöhen. Die Figur zeigt die Verteilervorrichtung 1 in einer ersten Arbeitestellung, mit einem ausgefahrenen Verteilerkamm 8. In der zweiten, nicht gezeigten Arbeitsstellung ist die erste Schub-Zugvorrichtung 6 eingefahren, und somit der Verteilerkamm 8 in Richtung Ausbringfahrzeug und Hauptrahmen (HR) beigezogen. In dieser Arbeitsstellung werden die beiden inneren Streifen begüllt. Selbstverständlich sind die erste und die zweite Arbeitsstellung jeweils als Endstellungen zu sehen, da durch die erfindungsgemäße Verteilervorrichtung 1 die Arbeitsbreite frei einstellbar ist.

### Bezugszeichen

- 1: Verteilervorrichtung
- 2: Auslegerarm
- 3,3': Tragrohre
- 4: Verstrebung
- 5: Verstrebung
- 6: Schub-Zugvorrichtung
- 7: Ausschubrahmen
- 8: Verteilerkamm
- 9: Verteilerkopf
- 10, 10': Schwenkgelenke
- 11, 11': Zylinder
- 12, 12': Schub-Zugvorrichtung
- 13: Schwenkgelenk
- 14, 14': äußere Spitzen
- 15: Blattfedern mit Gleitschuhen
- VS: Verteilerschlauch
- HR: Hauptrahmen

## Patentansprüche

1. Verteilervorrichtung (1) für ein Ausbringfahrzeug, insbesondere ein Gülleausbringfahrzeug, mit zumindest einem um eine vertikale Achse schwenkbaren Auslegerarm (2) und zumindest einem um eine horizontale Achse schwenkbaren Verteilerkamm (8) mit einer Vielzahl an vorzugsweise einzeln federnd gelagerten, in Gleitschuhen (15) mündenden Verteilerschläuchen, die von einem Verteilerkopf (9) gespeist werden, **dadurch gekennzeichnet, dass** der Verteilerkamm (8) über eine erste Schub-Zugvorrichtung (6) im Wesentlichen parallel zum Auslegerarm (2) zwischen einer ersten Arbeitsstellung mit einem ausgefahrenen Verteilerkamm und einer zweiten Arbeitsstellung mit einem beictezogenen Verteilerkamm verschiebbar geführt ist, und
dass der untere Teil des Verteilerkamms dreiteilig ausgeführt ist, und die beiden äußeren Spitzen (14, 14') einklappbar sind.

2. Verteilervorrichtung (1) nach Anspruch 1, **dadurch gekennzeichnet, dass** der Verteilerkamm (8) über eine zweite Schub-Zugvorrichtung (12, 12') im Wesentlichen rechtwinklig zu dem Auslegerarm (2) bzw. zu einem Ausschubrahmen 7 verschiebbar geführt ist.

3. Verteilervorrichtung (1) nach Anspruch 1 oder 2, **dadurch gekennzeichnet, dass** der untere Teil des Verteilerkamms dreiteilig ausgeführt ist, und die beiden äußeren Spitzen (14, 14') einklappbar sind.

4. Verteilervorrichtung (1) nach Anspruch 1, 2 oder 3, **dadurch gekennzeichnet, dass** der Verteilerkamm (8) mittels der ersten Schub-Zugvorrichtung (6) von einer ersten Arbeitsstellung mit einem ausgefahrenen Verteilerkamm (8), in eine zweite Arbeitsstellung mit einem beigezogenen Verteilerkamm (8) und jeder dazwischen liegenden Arbeitsstellung verschoben werden kann.

5. Verteilervorrichtung (1) nach einem der vorstehenden Ansprüche, **dadurch gekennzeichnet, dass** der Verteilerkopf (9) auf dem Verteilerkamm (8) ausgebildet ist.

6. Verteilervorrichtung (1) nach einem der vorstehenden Ansprüche, **gekennzeichnet durch** einen weiteren Verteilerkamm.

7. Verteilervorrichtung (1) nach Anspruch 6, **dadurch gekennzeichnet, dass** der weitere um eine horizontale Achse schwenkbare Verteilerkamm an dem Auslegerarm (2) ausgebildet ist, und eine Vielzahl an Verteilerschläuchen, die von einem Verteilerkopf gespeist werden, trägt.

8. Verteilervorrichtung (1) nach Anspruch 6 oder 7, **gekennzeichnet durch** eine Verschieblichkeit, insbesondere in eine Transportstellung, in der beiden Verteilerkämme parallel zueinander und hintereinander angeordnet sind.

9. Ausbringfahrzeug, insbesondere ein Gülleausbringfahrzeug mit einer oder zwei Verteilervorrichtungen (1) nach einem der vorstehenden Ansprüche.

10. Ausbringfahrzeug nach Anspruch 9, **gekennzeichnet durch** eine front- oder heckseitig ausgebildete Verteilervorrichtung (1).

## Claims

1. Distributor device (1) for a spreader vehicle, in particular a liquid manure spreader vehicle, with at least one extension arm (2) which is pivotable about a vertical axis, and at least one distributor comb (8) which is pivotable about a horizontal axis, with a multiplicity of distributor hoses which are preferably mounted resiliently individually, open into sliding shoes (15) and are fed by a distributor head (9), **characterized in that** the distributor comb (8) is guided via a first push-pull device (6) so as to be displaceable substantially parallel to the extension arm (2) between a first working position with an extended distributor comb and a second working position with a distributor comb pulled closer, and **in that** the lower part of the distributor comb is of three-part design, and the two outer tips (14, 14') can be folded in.

2. Distributor device (1) according to Claim 1, **characterized in that** the distributor comb (8) is guided via a second push-pull device (12, 12') so as to be displaceable substantially at right angles to the extension arm (2) or to a push-out frame (7).

3. Distributor device (1) according to Claim 1 or 2, **characterized in that** the lower part of the distributor comb is of three-part design, and the two outer tips (14, 14') can be folded in.

4. Distributor device (1) according to Claim 1, 2 or 3, **characterized in that** the distributor comb (8) can be displaced by means of the first push-pull device (6) from a first working position with an extended distributor comb (8) into a second working position with a distributor comb (8) pulled closer and every working position located in between.

5. Distributor device (1) according to one of the preceding claims, **characterized in that** the distributor head (9) is formed on the distributor comb (8).

6. Distributor device (1) according to one of the preceding claims, **characterized by** a further distributor comb.

7. Distributor device (1) according to Claim 6, **characterized in that** the further distributor comb which is pivotable about a horizontal axis is formed on the extension arm (2) and bears a multiplicity of distributor hoses which are fed by a distributor head.

8. Distributor device (1) according to Claim 6 or 7, **characterized by** displaceability, in particular into a transport position, in which the two distributor combs are arranged parallel to each other and one behind the other.

9. Spreader vehicle, in particular a liquid manure spreader vehicle, with one or two distributor devices (1) according to one of the preceding claims.

10. Spreader vehicle according to Claim 9, **characterized by** a distributor device (1) which is formed on the front side or rear side.

## Revendications

1. Dispositif de distribution (1) pour un épandeur, en particulier un épandeur de lisier, comprenant au moins un bras de potence (2) pouvant pivoter autour d'un axe vertical et au moins un peigne de distribution (8) pouvant pivoter autour d'un axe horizontal avec une pluralité de tuyaux de distribution débouchant dans des patins de glissement (15), supportés de manière élastique de préférence individuellement, qui sont alimentés par une tête de distribution (9), **caractérisé en ce que** le peigne de distribution (8) est guidé de manière déplaçable par le biais d'un premier dispositif de poussée-traction (6) essentiellement parallèlement au bras de potence (2) entre une première position de travail avec un peigne de distribution sorti et une deuxième position de travail avec un peigne de distribution rentré, et **en ce que** la partie inférieure du peigne de distribution est réalisée en trois parties, et les deux pointes extérieures (14, 14') peuvent être rentrées par rabattement.

2. Dispositif de distribution (1) selon la revendication 1, **caractérisé en ce que** le peigne de distribution (8) est guidé de manière déplaçable par le biais d'un deuxième dispositif de poussée-traction (12, 12') essentiellement à angle droit par rapport au bras de potence (2) ou par rapport à un cadre d'éjection (7).

3. Dispositif de distribution (1) selon la revendication 1 ou 2, **caractérisé en ce que** la partie inférieure du peigne de distribution est réalisée en trois parties, et les deux pointes extérieures (14, 14') peuvent être rentrées par rabattement.

4. Dispositif de distribution (1) selon la revendication 1, 2 ou 3, **caractérisé en ce que** le peigne de distribution (8) peut être déplacé au moyen du premier dispositif de poussée-traction (6) d'une première position de travail avec un peigne de distribution sorti (8), dans une deuxième position de travail avec un peigne de distribution (8) rentré et avec chaque position de travail intermédiaire.

5. Dispositif de distribution (1) selon l'une quelconque des revendications précédentes, **caractérisé en ce que** la tête de distribution (9) est réalisée sur le peigne de distribution (8).

6. Dispositif de distribution (1) selon l'une quelconque des revendications précédentes, **caractérisé par** un peigne de distribution supplémentaire.

7. Dispositif de distribution (1) selon la revendication 6, **caractérisé en ce que** le peigne de distribution supplémentaire pouvant pivoter autour d'un axe horizontal est réalisé sur le bras de potence (2) et porte une pluralité de tuyaux de distribution qui sont alimentés par une tête de distribution.

8. Dispositif de distribution (1) selon la revendication 6 ou 7, **caractérisé par** une possibilité de déplacement, en particulier dans une position de transport, dans laquelle les deux peignes de distribution sont disposés parallèlement l'un à l'autre et l'un derrière l'autre.

9. Épandeur, en particulier épandeur de lisier, comprenant un ou deux dispositifs de distribution (1) selon l'une quelconque des revendications précédentes.

10. Épandeur selon la revendication 9, **caractérisé par** un dispositif de distribution (1) réalisé du côté avant ou du côté arrière.
